# EUROPEAN PATENT APPLICATION

(11) **EP 1 564 449 A2**
(43) Date of publication of application: **17.08.2005**
(21) Application number: 05002602.0
(22) Date of filing: 08.02.2005
(51) Int. Cl.: F16H 61/32

(54) **Apparatus for controlling an automatic shift operation for a vehicle**

(30) Priority: 10.02.2004 JP 2004033971
(71) Applicant: AISIN AI Co., Ltd., Nishio-shi, Aichi-ken (JP)
(72) Inventor: Miyazaki, Takeshige, Nishio-Shi Aichi-ken (JP); Kamiya, Mitsutoshi, Nishio-Shi Aichi-ken (JP)
(74) Representative: SERJEANTS

(57) **Abstract**

An apparatus for controlling an automatic shift operation for a vehicle includes a driving-power source (30) having a driving-power operating member (31), a shift-operating member (32) for switching a shift stage in a transmission (2), and a driving-power transmitting mechanism (33) having at least one of intermediate operating members (37, 40, 42, 43, 44, 47) disposed between the driving-power operating member (31) and the shift-operating member (32). Driving power of the driving-power operating member (31) is transmitted to the shift-operating member (32) via at least the one of the intermediate operating members (37, 40, 42, 43, 44, 47). The apparatus further includes operating-speed varying means (6) for varying an operating speed of the driving-power source (30), immediately prior to impact, when at least one of the driving-power operating member (31) and the intermediate operating members (37, 40, 42, 43, 44, 47) impacts at least another one thereof.

## Description

### FIELD OF THE INVENTION

This invention generally relates to an apparatus for controlling an automatic shift operation for a vehicle.

### BACKGROUND

JP2002-147590A (corresponding to EP1205691A1) discloses an apparatus for controlling a shift operation, an apparatus which includes basic elements in a conventionally used manual transmission and automatically changes a shift stage in the manual transmission. This apparatus further includes a motor having a driving-power operating member, a synchronizer ring serving as a shift-operating member for changing a shift stage in the transmission, and a driving-power transmitting mechanism positioned between the drivingpower operating member of the motor and the synchronizer ring. In the event of a shift operation being required in the transmission, a driving power of the motor is transmitted to the driving-power transmitting mechanism via the driving-power operating member, and the synchronizer ring is then operated, whereupon an automatic shift operation takes place in the transmission.

Compared with an apparatus for changing a shift stage in a transmission by a manual operation of a driver, the above-described apparatus, in which an automatic shift operation takes place, secures a much-improved level of convenient driving operation. However, this apparatus may still be susceptible of a certain improvement in terms of a collision noise. A reason for this is that mechanical elements in the apparatus for an automatic shift operation may be operated at a considerably higher speed than those in an apparatus for changing a shift stage manually, thereby resuting in impacts between the mechanical elements, and, in consequence, a louder degree of collision noise. Collision noise may give an occupant of a vehicle a feeling of unpleasantness and is not considered desirable. Therefore, in order to achieve a higher quality of a vehicle, it is preferable that collision noise, which may occur in the event of a shift operation in a transmission, be reduced, or avoided.

The present invention has been made in view of the above circumstances, and provides an apparatus for controlling an automatic shift operation, an apparatus which effectively reduces the degree of impact noise occurring between mechanical elements in the event of an automatic shift operation taking place in a transmission.

### SUMMARY OF THE INVENTION

According to an aspect of the present invention, an apparatus for controlling an automatic shift operation for a vehicle includes: a driving-power source having a driving-power operating member; a shirt-operating member operated for switching a shift stage in a transmission; and a driving-power transmitting mechanism having at least one of intermediate operating members disposed between the driving-power operating member and the shift-operating member. A driving power of the driving-power operating member is transmitted to the shift-operating member via at least the one of the intermediate operating members so as to perform an automatic shift operation. The apparatus further includes: operating-speed varying means for varying an operating speed of the driving-power source on eventuality of at least one of the driving-power operating member and the intermediate operating members impacting at least another one of the driving-power operating member and the intermediate operating members, wherein impact noise is reduced.

It is preferable that the operating-speed varying means reduce the operating speed of the driving-power source, immediately prior to impact, on eventuality of at least the one of the driving-power operating member and the intermediate operating members impacting at least the another one of the driving-power operating member and the intermediate operating members, wherein the impact noise is reduced.

It is further preferable that the operating-speed varying means set the operating speed of the driving-power source at a relatively high speed level when a vehicle driving condition or a vehicle driving-power source driving condition is a relatively high level, and, set the operating speed of the driving-power source at a relatively low speed level when the vehicle driving condition or the vehicle driving-power source driving condition is a relatively low level. The operating speed of the driving-power source set at the relatively low speed level at the event of the vehicle driving condition or the vehicle driving-power source driving condition being the relatively low level is lower than the operating speed of the driving-power source at the event of the vehicle driving condition or the vehicle driving-power source driving condition being the relatively high level.

### BRIEF DESCRIPTION OF THE DRAWINGS

The foregoing and additional features and characteristics of the present invention will become more apparent from the following detailed description considered with reference to the accompanying drawings, wherein:

Fig. 1 is a block view schematically illustrating an apparatus for controlling an automatic shift operation according to a first embodiment of the present invention;

Fig. 2 is a conceptual diagram illustrating an automatically shifting mechanism according to the first embodiment of the present invention;

Fig. 3 is an explanatory diagram for explaining an impact relation of elements in the vicinity of a driving-power operating member according to the first embodiment of the present invention;

Fig. 4 is a time chart for explaining an attribute of an operating speed VA under a condition that an operating-speed varying process is not performed;

Fig. 5 is a time chart for explaining an attribute of an operating speed VB under a condition that the operating-speed vayring process is performed according to the first embodiment of the present invention;

Fig. 6 is a time chart for explaining an attribute of an operating speed of the driving-power source according to a second embodiment of the present invention;

Fig. 7 is a diagram for explaining a relationship between an engine rotational speed and a stroke speed of the driving-power operating member according to a third embodiment of the present invention;

Fig. 8 is a flowchart for explaining an operating-speed varying process for varying an operating speed of the driving-power source in response to an engine rotational speed according to the third embodiment of the present invention; and

Fig. 9 is a flowchart for explaining an operating-speed varying process for varying an operating sped of the driving-power source in response to the engine rotational speed according to a fourth embodiment of the present invention

### DETAILED DESCRIPTION

Embodiments of the present invention will be described in detail below with reference to the accompanying drawings. An apparatus for controlling an automatic shift operation for a vehicle is provided for a manual transmission in which a shift stage can be switched in response to a manual operation of a shift lever by a driver.

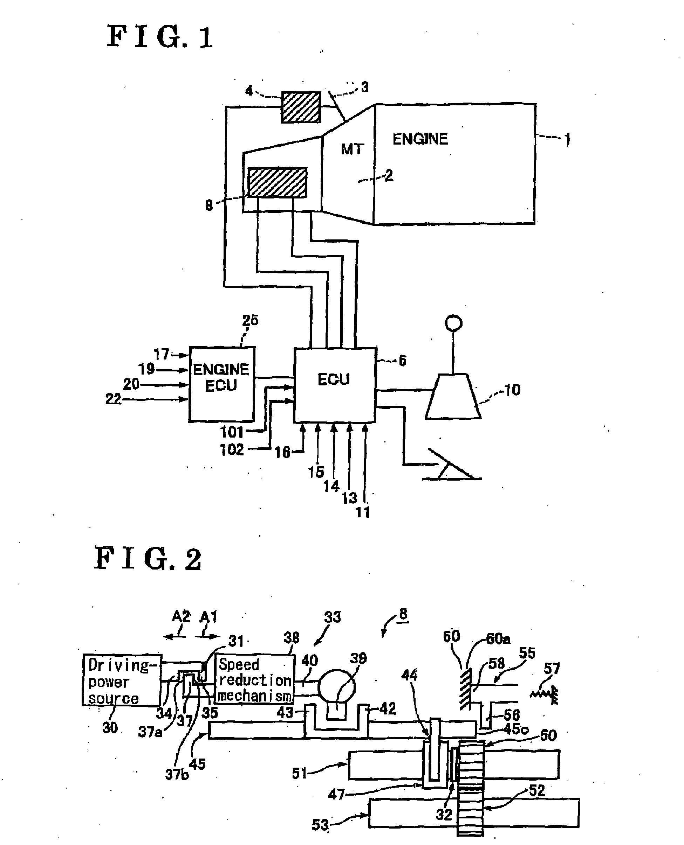

As illustrated in Fig. 1, the apparatus for controlling an automatic shift operation for a vehicle according to a first embodiment of the present invention includes a vehicle driving-power source 1 for activating a vehicle to drive; a transmission 2 for transmitting a driving power from the driving-power source 1 to wheels of the vehicle, a driving power of a level adequate for a shift stage selected in the transmission 2; a clutch 3 to be engaged, or disengaged, for transmitting, or interrupting, driving power from the driving-power source 1 to the transmission 2; a clutch actuator 4 for operating the clutch 3, an ECU 6 embedded with a central processing unit (CPU) and a memorizing storage; and an automatically shifting mechanism 8. The vehicle-driving power source 1 according to the first embodiment of the present invention is an internal combustion engine. However, the vehicle-driving power source 1 is not limited to an engine, and a motor can also be applied.

The apparatus for controlling an automatic shift operation for a vehicle according to the first embodiment further includes a shift sensor 11 for detecting a shift range at which a shift lever 10 should be positioned in accordance with a shifting intention of a driver; a select stroke sensor 13 for detecting a select-directional stroke position of the automatically shifting mechanism 8; a shift stroke sensor 14 for detecting a shift-directional stroke position of the automatically shifting mechanism 8; a steering switch 15 equipped at a driver's seat and manually operated by a driver who requires a shift change in the transmission 2; a clutch sensor 16 for detecting a degree of engagement or disengagement of the clutch 3, i.e., a position of the clutch 3, or of a load applied to the clutch 3; a vehicle speed sensor 17 for detecting a vehicle speed; an acceleration opening degree sensor 19 for detecting a degree of an acceleration opening of an acceleration element such as an accelerator pedal, an acceleration element which is operated manually by a driver, a throttle opening degree sensor 20 for detecting a degree of opening of a throttle valve; an engine rotational speed sensor 22 for detecting a rotational speed of the engine (i.e., the vehicle driving-power source 1), i,e., for detecting a rotational speed of a crankshaft, a rotational speed sensor 101 for detecting a rotational speed of an input shaft of the transmission 2 and a rotational speed sensor 102 for detecting a rotational speed of an output shaft of the transmission 2.

As illustrated in Fig. 1, the apparatus according to the first embodiment of the present invention is provided with both of the rotational speed sensors 101 and 102, and yet it is sufficient, as needed, at least one of the sensors 101 and 102 is provided in the apparatus. Further, when a motor is applied, instead of the engine, as the vehicle driving-power source 1, a motor rotational speed sensor for detecting a rotational speed of the motor can substitute the engine rotational speed sensor 22. Still further, although a clutch pedal does not have to be necessarily mounted at the vehicle, if needed, a clutch pedal can be mounted at a driver's seat.

As illustrated in Fig. 1, signals transmitted from the shift sensor 11, the select stroke sensor 13, the shift stroke sensor 14, the steering switch 15 and the clutch sensor 16 are input to the ECU 6, respectively. Signals transmitted from the vehicle speed sensor 17, the accelerated amount sensor 19, the throttle opening degree sensor 20 and the engine rotational speed sensor 22 are input to an Engine-ECU 25, respectively, and then transmitted to the ECU 6. Signals transmitted from the rotational speed sensors 101 and 102 are input directly to the ECU 6, respectively. The ECU 6 therefore outputs control signals to the automatically shifting mechanism 8 on the basis of these input signals and operates both of the automatically shifting mechanism 8 and the clutch actuator 4, or the automatically shifting mechanism 8. Therefore, a full automatic system or an automatic shift system can be secured.

Next, described below, with reference to Fig. 2, is the automatically shifting mechanism 8.

The automatically shifting mechanism 8 has a structure built up with a driving-power source 30 equipped with a driving-power operating member 31, a synchronizer ring 32 serving as a shift-operating member, and operated for changing a gear ratio in the transmission 2, i.e., operated for changing a shift stage in the transmission 2; and a driving-power transmitting mechanism 33 positioned between the driving-power source 30 or the driving-power operating member 31 and the synchronizer ring 32.

As the shift-operating member, a component of a synchronizing mechanism of the transmission 2, such as a sleeve, a fork for moving the sleeve and a synchronizer ring moved by the sleeve, can be applied.

As the driving-power source 30 according to the first embodiment of the present invention, a device such as a motor or a hydraulically driven-type device (e.g., an oil pressure device) can be applied. The driving-power operating member 31 of the driving-power source 30 is movable in both a forward, denoted by an arrow A1, direction, and a rearward, denoted by an arrow A2, direction. The driving-power operating member 31 is arm-shaped and is integrally provided with a first contact portion 34 and a second contact portion 35, contact portions positioned, opposite one another and having a spacing therebetween. The first contact portion 34 is operated when the driving-power source 30 is activated for a forward operation, while the second contact portion 35 is operated when the driving-power source 30 is activated for a rearward operation.

When the driving-power source 30 is a motor, a DC motor, an AC motor, a stepping motor, an ultrasonic motor and so on can be applied. As a DC motor, a brushless motor, a brush motor and so on can be applied. When the driving-power source 30 is a hydraulically driven-type device, an oil pressure-type device, an air pressure-type device and so on can be applied. Moreover, an engine can be applied as the driving-power source 30.

The driving-power transmitting mechanism 33, as illustrated in Fig. 2, has a structure built up with a movable member 40, a fork shaft 45 and a sleeve 47. The movable member 40 includes a first engagement member 37, a speed reduction mechanism 38 and a second engagement member 39. The first engagement member 37 can impact with the driving-power operating member 31 of the driving-power source 30. The fork shaft 45 includes both a third engagement member 42, and a fourth engagement member 43, each of which is engageable with the second engagement member 39 of the movable member 40, and a fork 44 serving as a fifth engagement member. The fork shaft 45 having the aforementioned structure acts as a first intermediate member. The sleeve 47 acts as a sixth engagement member, is engaged with the fork 44 of the fork shaft 45 and operates the synchronizer ring 32. According to the first embodiment of the present invention, the movable member 40 including both the first engagement member 37 and the second engagement member 39, the third engagement member 42, the fourth engagement member 43, the fork 44 and the sleeve 47 can serve as intermediate operating members, respectively. Moreover, the driving-power operating member 31 of the driving-power source 30 can also serve as an intermediate operating member. The sleeve 47 moves the synchronizer ring 32 in a direction of a shift stage to be selected, a movement of the sleeve 47 which results in a shift operation in the transmission 2. The first engagement member 37 of the movable member 40 is arranged between the first contact portion 34 and the second contact portion 35 of the driving-power operating member 31. In the above-description, the shift fork shaft 45, the fork 44, the sleeve 47 and the synchronizer ring 32 are singularized respectively in order to simplifying the description. However, each component thereof can be provided in a multiple quantity.

Moreover, as illustrated in Fig. 2, the transmission 2 includes an input shaft 51, serving as a second intermediate member having a first gear 50, and an output shaft 53, serving as a third intermediate member having a second gear 52. The input shaft 51 is arranged substantially in parallel with the output shaft 53.

When the driving-power source 30 is activated, or rotated, in one direction, the driving-power operating member 31 moves in the forward direction, i.e., in the arrow A1 direction. In this case, the first contact portion 34 of the driving-power operating member 31 impacts with an engagement surface 37a of the first engagement portion 37, and further the driving-power operating member 31 moves the first engagement portion 37 to the extent of a predetermined stroke in the direction of arrow A1, thus maintaining a state of impact. The movement of the first engagement member 37 in the direction of arrow A1 can be decelerated by the speed reduction mechanism 38. Following the movement of the first engagement member 37 in the direction of arrow A1, the second engagement member 39 moves in the direction of arrow A1 and then impacts with the third engagement portion 42. Following the impact of the second engagement member 39 with the third engagement portion 42, the fork shaft 45 moves, along with the fork 44, in the direction of arrow A1. The sleeve 47, engaged with the fork 44 then moves in the same direction, whereupon the synchronizer ring 32 moves for the purpose of selecting a shift stage in the transmission 2.

In the event of an automatic shift operation in the transmission 2 being performed with the above-described mechanism, a driving force transmitted from the vehicle driving-power source 1 to the input shaft 51 is further transmitted to the output shaft 53 via the first and second gears 50 and 52. The output shaft 53 then starts rotating about an axis thereof. The driving force is then transmitted to the wheels of a vehicle from the output shaft 53, whereupon the vehicle starts moving. When the fork shaft 45 moves in the direction of arrow A1, an end tip portion 45c of the fork shaft 45 comes in contact, against a biasing force of a biasing spring 57, with a fourth contact portion 56 of a fourth intermediate member 55 such as an idler gear, whereupon the fourth intermediate member 55 moves in the direction of arrow A1.

On the other hand, when the driving-power source 30 is activated or rotated in the other direction, the driving-power operating member 31 moves in a rearward direction, i.e., in the direction of arrow A2. In this case, the second contact portion 35 of the driving-power operating member 31 impacts with an engagement surface 37b of the first engagement portion 37, and further the driving-power operating member 31 moves the first engagement portion 37 in the direction of arrow A2, thus maintaining the impact. The movement of the first engagement member 37 in the direction of arrow A2 can be decelerated by the speed reduction mechanism 38. Following the movement of the first engagement member 37 in the direction of arrow A2, the second engagement member 39 moves in the direction of arrow A2 and then impacts with the fourth engagement portion 43. Following the impact of the second engagement member 39 with the fourth engagement portion 43, the fork shaft 45 moves, along with the fork 44, in the direction of arrow A2. The sleeve 47, engaged with the fork 44, then moves in the same direction, whereupon the synchronizer ring 32 moves for the purpose of terminating a shift operation in the transmission 2.

As described above, when the fork shaft 45 moves in the direction of arrow A2, the fourth contact portion 56 of the fourth intermediate member 55 impacts, by virtue of the biasing force of the biasing spring 57, with the end tip portion 45c of the fork shaft 45. In such an event, a fifth contact portion 58 of the fourth intermediate member 55 comes into contact with a stopper portion 60a of a casing 60 of the automatically shifting mechanism 8, thereby maintaining impact between the fourth contact portion 56 with the end tip portion 45c of the fork shaft 45. Therefore, the degree to which the forth intermediate member 55 moves can be restrained.

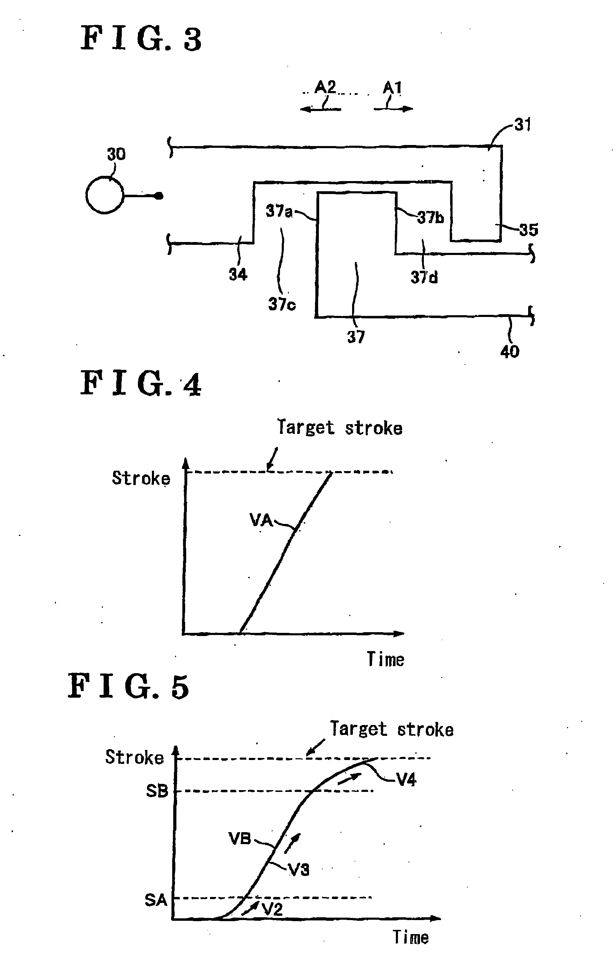

Next, described below, with reference to Fig. 3, are more details on the automatically shifting mechanism 8.

As illustrated in Fig. 3, the first contact portion 34 of the driving-power operating member 31 is positioned at one side of the first engagement portion 37, one side which has a spacing 37c relative to the first contact portion 34, while the second contact portion 35 of the driving-power operating member 31 is positioned at the other side of the first engagement portion 37, the other side which has a spacing 37d relative to the second contact portion 35.

When the driving-power source 30 is initially activated or rotated in the one direction for performing a shift operation in the transmission 2, the driving-power operating member 31 moves in the forward direction, i.e., in the direction of arrow A1, immediately after the start-up of the driving-power source 30. In such a case, the first contact portion 34 of the driving-power operating member 31 impacts with the engagement surface 37a of the first engagement portion 37. The first contact portion 34, which has been pushing the engagement surface 37a of the first engagement portion 37, moves the first engagement portion 37 by means of the predetermined stroke in the forward direction. When the first contact portion 34 of the driving-power operating member 31 moves by means of the predetermined stroke in the direction of arrow A1, the stroke movement of the driving-power operating member 31 is terminated, and from then on, the driving-power source 30 is no longer activated. When the stroke movement of the driving-power operating member 31 is terminated, an underlying concept is that the first engagement member 37 will stop immediately in response to the termination of the stroke movement of the driving-power operating member 31. However, in the case of a first engagement member 37 that has a certain mass, the first engagement member 37, which has been pushed by the driving-power operating member 31, has been applied with an inertia force, by virtue of which the first engagement member 37 is continuously moved in the direction of arrow A1. Especially for the purpose of abbreviating a period of time required for a shift operation in the transmission 2, the driving-power source 30 is activated at a relatively high speed. In such a case, it is preferable that serious consideration be give to the inertia force of the first engagement member 37.

As described above, even when the driving-power operating member 31 stops as a result of a cessation in activation of the driving-power source 30, due to the inertia force of the first engagement member 37, the first engagement member 37 may on occasions keep moving in the direction of the arrow A1. As a result, there is a danger of the engagement surface 37b of the first engagement member 37 impacting with the second contact portion 35 of the driving-power operating member 31. Moreover, especially when a shift operation needs to be performed at a relatively high speed, the driving-power source 30 is liable to be activated at a relatively high rotational speed, and the driving-power operating member 31 is liable to be moved at a relatively high speed. In such a case, the level of impact noise between the engagement surface 37b of the first engagement member 37 and the second contact portion 35 of the driving-power operating member 31 tends to become higher.

Likewise, when the driving-power source 30 is initially activated or rotated in the other direction for performing a shift operation in the transmission 2, as illustrated in Fig. 3, immediately after the start-up of the driving-power source 30, the driving-power operating member 31 moves back in a rearward direction, i.e., in the direction of arrow A2. In such a case, the second contact portion 35 of the driving-power operating member 31 impacts the engagement surface 37b of the first engagement member 37, and the second contact portion 35, which has been pushing the engagement surface 37b of the first engagement portion 37, moves the first engagement portion 37 by means of the predetermined stroke in a rearward direction. When the second contact portion 35 of the driving-power operating member 31 moves by means of the predetermined stroke in the direction of arrow A2, the stroke movement of the driving-power operating member 31 is terminated, and from then on, the driving-power source 30 is no longer activated. When the stroke movement of the driving-power operating member 31 is terminated, an underlying concept is that the first engagement member 37 will stop immediately in response to the termination of the stroke movement of the driving-power operating member 31. However, in the case of a first engagement member 37 having a certain mass, the first engagement member 37, which has been pushed by the driving power operating member 31, has been applied with an inertia force, by virtue of which the first engagement member 38 is continuously moved in the direction of arrow A2.

As described above, even when the driving-power operating member 31 stops as a result of the cessation of stopping activation of the driving-power source 30, due to the inertia force of the first engagement member 37, the first engagement member 37 may keep moving in the direction of arrow A2. Accordingly, there is a danger of the engagement surface 37a of the first engagement member 37 impacting with the first contact portion 34 of the driving-power operating member 31.

Thus, as described above, in a conventional manual transmission in which a shift operation is performed in response to a manual operation of a driver, mechanical elements are operated at a relatively low speed, and accordingly impact noise among the mechanical elements has been so minor as to be insignificant. On the other hand, in the automatically shifting mechanism 8 according to the first embodiment of the present invention, the driving-power source 30 is activated or rotated at a high speed, and the driving-power operating member 31 is moved at a high speed. As a result, mechanical elements of the automatically shifting mechanism 8 are operated at a considerably high speed, and as a result there has been a tendency for mechanical elements to impact or collide with one another. In light of impact noise that may occur, it is preferable that the driving-power source 30 be activated or rotated at a relatively low speed, and that the driving-power operating member 31 also be operated at a relatively low speed. Moreover, even immediately prior to the termination of activating the driving-power source 30, it is preferable that the driving-power source 30 be activated or rotated at a relatively low speed, and that the driving-power operating member 31 also be operated at a relatively low speed.

Because of the above factors, according to the first embodiment of the present invention, when the driving-power source 30 is initially activated or rotated for purposes of a shift operation, an activating speed of the driving-power source 30, and a movement speed of the driving-power operating member 31 are respectively controlled at relatively low speed levels. Moreover, even immediately prior to the cessation of activating the driving-power source 30, the activating speed of the driving-power source 30 and the movement speed of the driving-power operating member 31 are respectively controlled at relatively low speed levels.

In other words, according to the first embodiment of the present invention, at a time immediately prior to an impact of the first contact portion 34 of the driving-power operating member 31 with the first engagement portion 37 in response to an initial activation of the driving-power source 30, operating-speed varying means, which is provided in the ECU 6 as an algorithm, is operated, inter alia, for the purpose of varying or reducing the operating speed of the driving-power source 30. The operating-speed varying means performs an operating-speed varying process. Moreover, according to the first embodiment of the present invention, at a time immediately prior to the cessation of the activation of the driving-power source 30, operating-speed varying means, which is provided in the ECU as an algorithm, is operated, inter alia, for purposes of varying the operating speed of the driving-power source 30.

Here, a point immediately prior to an impact can be determined on the basis of a parameter such as a design-dimensional value of each mechanical component in the automatically shifting mechanism 8, and the length of time which has elapsed since the start-up of activating the driving-power source 30. Therefore, a point immediately prior to an impact can be determined on the basis of at least one of the following factors: a degree of movement of the driving-power operating member 31 of the driving-power source 30; a degree of movement of mechanical components in the automatically shifting mechanism 8, a degree at which impact takes place in the automatically shifting mechanism 8; and the length of time which has elapsed since the start-up of activating the driving-power source 30.

As described above, the operating speed varying means according to the embodiment of the present invention acts, inter alia, for the purpose of varying operating speed of the driving-power operating member 31, i.e., for the purpose of varying operating speed of the driving-power source 30. Alternatively, the operating speed varying means can acts for the purpose of varying operating speeds of other mechanical elements in the automatically shifting mechanism 8.

Next, explained below is a process for varying operating speed by use of the operating speed varying means within the ECU 6, with reference to Fig. 4.

Fig. 4 is a time chart for explaining an attribute of an operating speed VA of the driving-power operating member 31 of the driving-power source 30 in the event that a process for varying or reducing an operating speed is not performed. Fig. 4 illustrates a characteristic of the operating speed VA in a conventional apparatus for controlling an automatic shift operation. A horizontal axis of Fig. 4 represents a time, while a vertical axis thereof represents a stroke of the driving-power operating member 31 of the driving-power source 30. As is evident from Fig. 4, when a process for reducing an operating sped is not performed, the operating speed VA of the driving-power operating member 31 is considerably high. In such a case, it is preferable that careful consideration be given to the question of impact noise among mechanical elements. In particular, because shift-stage changes are made fairly frequently, impact noise occurring among mechanical elements at the time of a shift operation should not be ignored.

Fig. 5 is a time chart for explaining an attribute of an operating speed VB of the driving-power operating member 31 in the event that the process for reducing an operating speed is performed by the operating speed varying means according to the first embodiment of the present invention. A horizontal axis of Fig. 5 represents a time, while a vertical axis thereof represents a stroke of the driving-power operating member 31. As is apparatus from Fig. 5, the operating speed VB of the driving-power operating member 31 encompasses elements such as an operating speed V2 immediately after the commencement of a shirt operation, an operating speed V3 during a shift operation and an operating speed V4 immediately before the cessation of a shift operation.

The operating speed V2 of the driving-power operating member 31 displays variations of speed of the driving-power operating member 31 during a period from a point immediately after the commencement of a shift operation until a stroke of the driving-power operating member 31 reaches a first tentative target stroke SA. The operating speed V2 of the driving-power operating member 31 has been effectively reduced by a process for varying an operating speed. The operating speed V4 of the driving-power operating member 31 displays variations of speed of the driving-power operating member 31 during a period between a point after the stroke of the driving-power operating member 31 has reached a second tentative target stroke SB and a point at which the shift operation is terminated. The operating speed V4 of the driving-power operating member 31 has been effectively reduced by a process for varying an operating speed. The second tentative target stroke SB is here designed at a higher value than the first tentative target stroke SA. Compared with the aforementioned operating speed V2, the operating speed V3 of the driving-power operating member 31 is not influenced by a process for varying an operating speed, and is controlled at a relatively high speed. Therefore, according to the first embodiment of the present invention, it is possible to prevent the period of time required for a shift operation from being extended unduly. In terms of the operating speeds V2, V3 and V4, the following equations can be obtained: V2<V3 and V4<V3.

As described above, according to the first embodiment of the present invention, the operating speed V2 of the driving-power operating member 31 immediately after a commencement of a shift operation is effectively reduced by means of a process for varying an operating speed. Therefore, impact noise occurring among mechanical elements immediately after the commencement of a shift operation, i.e., immediately after the commencement of activating the driving-power source 30, can be effectively reduced, or even avoided.

Moreover, according to the first embodiment of the present invention, the operating speed V4 immediately before the cessation of a shift operation is controlled at a lower speed value than the operating speed V3. Therefore, impact noise occurring among mechanical elements immediately before the cessation of a shift operation can be effectively reduced, or even avoided.

As described above, according to the first embodiment of the present invention, even when an automatic shift operation on a vehicle takes place frequently, impact noise among mechanical elements can be effectively reduced, thereby leading to a reduction, or even the elimination of a sense of unpleasantness felt by an occupant of a vehicle.

The above description explains that the operating speed of the driving-power source 30 is reduced for the purpose of reducing, or eliminating impact noise in the event that the driving-power operating member 31 comes in contact with a counterpart thereof, i.e., with the first engagement member 37. However, the present invention is not limited to the above-description. Alternatively, the operating speed of the driving-power source 30 can be reduced for the purpose of reducing, or eliminating impact noise in the event that at least one of the driving-power source 30, the driving-power operating member 31 and the intermediate operating members impacts a counterpart thereof. Moreover, as described above, according to the first embodiment of the present invention, the movable member 40 including both the first engagement member 37 and the second engagement member 39, the third engagement member 42, the fourth engagement member 43, the fork 44 and the sleeve 47 can serve as intermediate operating members, respectively. The driving-power operating member 31 of the driving-power source 30 can also serve as the intermediate operating member.

In other words, according to the first embodiment of the present invention, the present invention can be applied to a configuration in which attention is focused on at least one mechanical element from among mechanical elements such as the driving-power source 30 and the intermediate operating members, at least one mechanical element which is capable of creating the greatest degree of impact noise among varying degrees of impact noises caused by these mechanical elements, and on how the greatest degree of impact noise can be effectively reduced or avoided.

According to the first embodiment of the present invention, the degree for reducing or varying the operating speed of the driving-power source 30 immediately prior to impact among mechanical components can be controlled substantially at a degree at which an occupant of a vehicle is not subjected to impact noise. Moreover, the degree for reducing the operating speed can be controlled, if needed, in response to an operating environment of the apparatus for controlling an automatic shift operation for a vehicle. When it assumes that an operating speed of the driving-power source 30, which is not applied with the operating-speed varying process, is indicated at 100, it is preferable that an operating speed of the driving-power source 30, which is applied with the operating-speed varying process, be illustrated at less than 90, 70, 50,30,10 and so on.

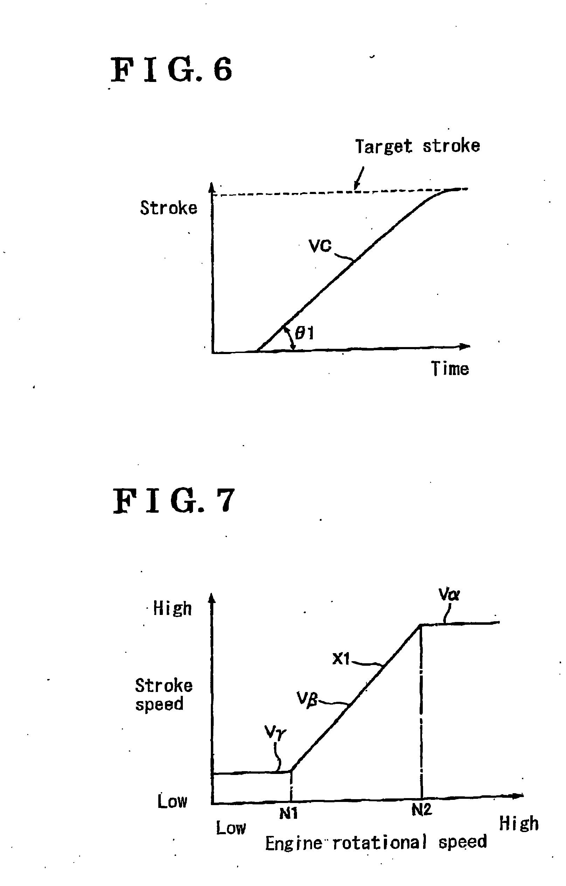

Next, described below with reference to Fig. 6 is an apparatus for controlling an automatic shift operation for a vehicle according to a second embodiment of the present invention. This apparatus according to the second embodiment of the present invention possesses substantially the same structure as the apparatus according to the first embodiment. Moreover, this apparatus according to the second embodiment can achieve substantially the same effects as the apparatus according to the first embodiment. Therefore, Figs. 1, 2 and 3 can be used for explaining the apparatus according to the second embodiment. Hereinafter, only points of difference therebetween will be explained below.

According to the second embodiment, an operating speed varying means is provided in the ECU 6 as an algorithm, an operating speed varying means that is operated for performing a process for varying an operating speed of the driving-power source 30.

Fig. 6 represents a time chart illustrating an attribute of an operating speed of the driving-power source 30. A horizontal axis of Fig. 6 represents a time, while a vertical axis thereof represents a stroke of the driving-power operating member 31. A characteristic line VC representing an operating speed of the driving-power source 30 possesses an essentially linear attribute. An angle θ 1 of the characteristic line VC varies in accordance with a vehicle driving condition such as a vehicle speed or an engine rotational speed. Alternatively, the angle θ 1 of the characteristic line VC varies can vary in accordance with a driving condition of an engine acting as the vehicle driving-power source 1. An engine rotational speed is generally applied as the driving condition of the engine.

According to the second embodiment of the present invention, the apparatus for controlling an automatic shift operation for a vehicle is further provided with vehicle driving-power source driving condition detecting means for detecting directly or indirectly a condition for driving a vehicle driving-power source (e.g., an engine or a motor). The vehicle driving-power source driving condition detecting means can detect at least one of an engine rotational speed, a crankshaft rotational speed, a motor rotational speed, a vehicle speed, an acceleration opening degree, a throttle opening degree, a wheel rotational speed, a shift position, a start-up condition of a vehicle driving-power source, and a rotational speed of the apparatus for controlling an automatic shift operation for a vehicle.

Moreover, according to the second embodiment of the present invention, the apparatus for controlling an automatic shift operation for a vehicle is further provided with vehicle condition detecting means for detecting a vehicle condition directly or indirectly. The vehicle condition detecting means can detect at least one of an engine rotational speed, a crankshaft rotational speed, a motor rotational speed, a vehicle speed, an acceleration opening degree, a throttle opening degree, a wheel rotational speed, a shift position, a condition for activating a vehicle driving-power source, and a rotational speed of the apparatus for controlling an automatic shift operation for a vehicle. As the rotational speed of the apparatus for controlling the automatic shift operation for a vehicle, a rotational speed of an input shaft and a rotational speed of an output shaft can be applied.

When a vehicle driving condition, such as a vehicle speed and an engine rotational speed, or a vehicle driving-power source condition, such as a driving condition of an engine, is a relatively low level, impact noise among mechanical elements can be easily transmitted to a driver of a vehicle. In light of the foregoing, according to the second embodiment of the present invention, when the vehicle driving condition or the vehicle driving-power source condition is controlled at a relatively low level, the ECU 6 controls the angle θ 1 of the characteristic line VC at a relatively low level for the purpose of reducing, or even eliminating impact noise. Accordingly, the operating speed of the driving-power operating member 31 of the driving-power source 30 can be effectively reduced. An impact speed among mechanical elements, mechanical elements which may create a feeling of unpleasantness to an occupant of a vehicle, can be effectively reduced, and impact noise can be effectively reduced.

On the other hand, when a vehicle driving condition or a vehicle driving-power source condition is controlled at a relatively high level, impact noise among mechanical elements is not easily transmitted to a driver of a vehicle. In light of the foregoing, according to the second embodiment of the present invention, when a vehicle driving condition or a vehicle driving-power source condition is controlled at a relatively high level, the ECU 6 controls the angle θ 1 of the characteristic line VC at a relatively high level. Accordingly, the operating speed of the driving-power operating member 31 of the driving-power source 30 can be effectively increased, and an impact speed among mechanical elements can be increased, thereby abbreviating a period of time required for a shift operation.

As described above, the operating speed of the driving-power operating member 31 can be controlled at a relatively high-speed level at the event that a vehicle driving condition or a vehicle driving-power source condition is relatively high. However, it is preferable that the operating speed of the driving-power operating member 31 be controlled at a lower speed level than the aforementioned high speed level, in particular immediately prior to an impact or immediately prior to reaching a target stroke, in response to a necessity of a shift operation in the transmission.

As described above, according to the second embodiment of the present invention, a period of time required for a shift operation by the automatically shifting mechanism 8 can be reduced, while impact noise among mechanical elements, impact noise which may create a feeling of unpleasantness to an occupant of a vehicle, can be effectively reduced. Therefore, whether a vehicle driving condition, or a vehicle driving-power source condition, is relatively high or low, an occupant is not subjected to impact noise occurring among mechanical elements.

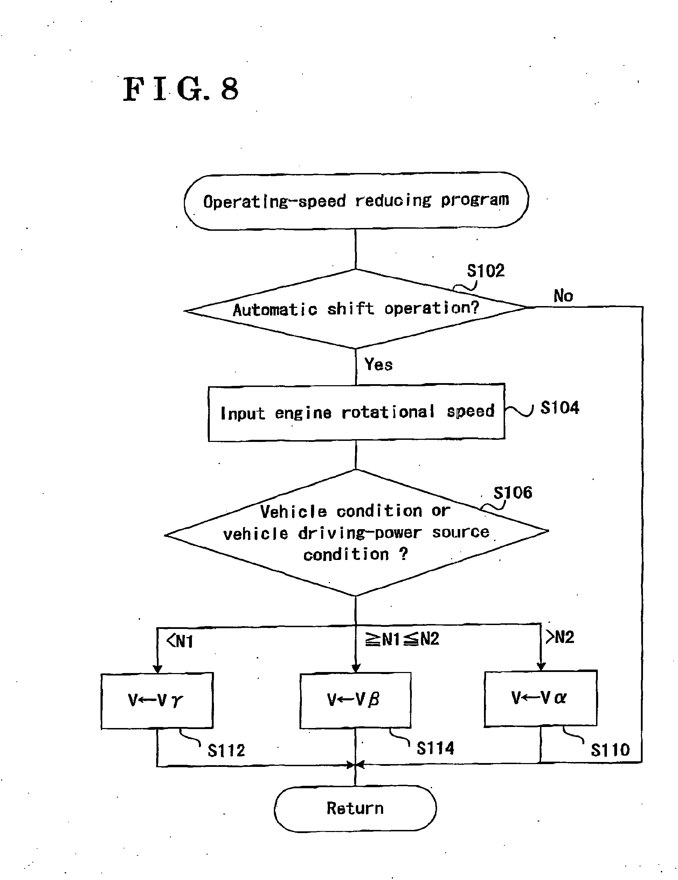

Next, described below with reference to Figs. 7 and 8 is an apparatus for controlling an automatic shift operation for a vehicle according to a third embodiment of the present invention. This apparatuses according to the third embodiment of the present invention possesses substantially the same structure as the apparatus according to the first and second embodiments. Moreover, this apparatus according to the third embodiment can achieve substantially the same effects as the apparatuses according to the first and second embodiments. Therefore, Figs. 1, 2 and 3 can be applied for explaining the apparatus according to the third embodiment. Hereinafter, only points of difference with the first and second embodiments can be explained below.

According to the third embodiment, attention is focused on the fact that, even when impact noise among mechanical elements occurs at the event that a vehicle driving condition or a vehicle driving-power source driving condition is relatively high, impact noise may not be so easily transmitted to an occupant. As a result, when a vehicle driving condition, or a vehicle driving-power source driving condition is relatively high, the operating speed of the driving-power operating member 31 of the driving-power source 30 can be relatively increased. In such a case, an impact speed among mechanical elements is increased, and a period of time required for performing a shift operation can accordingly be reduced.

That is, the operating speed varying means or the operating speed varying means can be operated at least for the following purposes: (1) when the vehicle driving condition, or the vehicle driving-power source condition, is relatively high, controlling the operating speed of the driving-power operating member 31 of the driving-power source 30 at a relatively high speed level immediately prior to impact among mechanical elements; (2) when the vehicle driving condition or the vehicle driving-power source condition is relatively low; controlling, immediately prior to impact among mechanical elements, the operating speed of the driving-power source 30 to be relatively lower level than that under a condition in which the vehicle driving condition, or the vehicle driving-power source condition, is relatively high; and (3) when the vehicle driving condition, or the vehicle driving-power source condition, is at a relatively intermediate range between the aforementioned high and low levels, controlling, immediately before impact among mechanical elements, the operating speed of the driving-power operating member 31 to be within an intermediate speed range, an intermediate speed range defined as extending between the operating speed of the driving power source 30 under conditions where the vehicle driving condition, or the vehicle driving-power source condition, is relatively low, and the operating speed thereof under conditions where the vehicle driving condition, or the vehicle driving-power source condition, is relatively high.

A supplementary explanation follows. The diagram in Fig. 7 illustrates a relationship between an engine rotational speed and a stroke speed of the driving-power operating member 31 in the event that the vehicle driving-power source 1 is an engine. A horizontal axis of Fig. 7 is an engine rotational speed, while a vertical axis thereof is a stroke speed of the driving-power operating member 31 of the driving-power source 30. According to the third embodiment of the present invention, when an engine rotational speed is at a speed value exceeding a speed value N2, i.e., when a vehicle driving condition or a vehicle driving-power source condition is relatively high, as illustrated by a characteristic line X1 in Fig. 7, the operating speed of the driving-power operating member 31 of the driving-power source 30, immediately before mechanical elements impact, is designed at a speed value V α, i.e., is designed at a relatively high speed value. In such a case, the period of time required for a shift operation can be effectively reduced.

On the other hand, when an engine rotational speed is less than a speed value N1, i.e., when the vehicle driving condition or the vehicle driving-power source driving condition is controlled at a relatively low level, the operating speed of the driving-power operating member 31 of the driving-power source 30, immediately before mechanical elements impact one another, is designed at a speed value V γ, i.e., is designed at a relatively low speed value. In this case, impact noise can be effectively reduced, or even avoided. Here, the speed value V γ is designed to be lower than the speed value V α.

Moreover, when an engine rotational speed is equal to or more than the speed value N1 and is equal to or less than the speed value N2, i.e., when the vehicle driving condition or the vehicle driving-power source condition is within a relatively intermediate range, the operating speed of the driving-power operating member 31 is designed at a speed value V β, i.e., is designed at a relatively intermediate speed value. The speed value V β is designed to be greater than the operating speed V γ and is less than the operating speed V α. In general, the speed value V β is designed to be increased in proportional to an engine rotational speed.

As described above, according to the third embodiment of the present invention, even when impact noise occurs among mechanical elements, when the vehicle driving condition or the vehicle driving-power source driving condition is relatively high, impact noise may not be easily transmitted to an occupant. In other words, even if the impact noise is relatively loud, no inconvenience is caused. Therefore, when the vehicle driving condition, or the vehicle driving-power source driving condition, is relatively high, the operating speed of the driving-power operating member 31 of the driving-power source 30 can be increased relatively, and an impact speed among mechanical elements is increased. In these circumstances, the speed, at which a shift operation is performed, can be increased.

On the other hand, in circumstances where the vehicle driving condition, or the vehicle driving-power source driving condition, is relatively low, the degree of quietness is marked, and impact noise may be easily transmitted to an occupant. Accordingly, when the impact noise is loud, adverse effects are felt. Therefore, when the vehicle driving condition, or the vehicle driving-power source driving condition, is relatively low, the operating speed of the driving-power operating member 31 of the driving-power source 30 can be decreased relatively, and impact speed among mechanical elements is decreased, In such circumstances, impact noise among mechanical elements can be inhibited to the maximum degree possible.

As explained by a flowchart illustrated in Fig. 8, the ECU 6 determines whether an automatic shift operation takes place, or otherwise, at step S102. At step S102, when a negative answer NO is obtained, i.e., when the ECU 6 judges that the automatic shift operation does not take place, the program returns to a main routine. At step S 102, when an affirmative answer YES is obtained, i.e., when the ECU 6 judges that the automatic shift operation takes place, the program proceeds to step S104. At step S104, the ECU 6 is input with a signal representing an engine rotational speed. At step S106, the ECU 6 discriminates, on the basis of the signal representing an engine rotational speed, a current vehicle driving condition or a current vehicle driving-power source driving condition among the three following conditions:(1) the engine rotational speed is less than the speed value N1; (2) the engine rotational speed is substantially equal to, or more than, the speed value N1 and is substantially equal to, or more than, the speed value N2; and (3) the engine rotational speed is more than the speed value N2. When the engine rotational speed is determined, at step S106, to be more than the speed value N2, the program proceeds to step S110, at which the operating speed of the driving-power operating member 31 of the driving-power source 30 is, immediately prior to impact, set at the speed value V α which is relatively high. When the engine rotational speed is determined, at step S112, to be less than the speed value N1, the program proceeds to step S112, at which the operating speed of the driving-power operating member 31 of the driving-power source 30 is, immediately prior to impact, set at the speed value V γ which is relatively low. When the engine rotational speed is determined, at step S112 to be substantially equal to, or more than, the speed value N1, and to be substantially equal to, or less than, the speed value N2, the program proceeds to step S114, at which the operating speed of the driving-power operating member 31 of the driving-power source 30 is, immediately prior to impact, set at the speed value V β which is a relatively intermediate speed between the speed values V α and V γ .

As described above, according to the third embodiment of the present invention, whether the vehicle driving condition, or the vehicle driving-power source driving condition is relatively high or low, an occupant is not subjected to impact noise occurring among mechanical elements. Although the above explanation with reference to Figs. 7 and 8 is based upon a condition at which the vehicle driving-power source 1 is an engine, the same structure and effects can be applied for a condition at which the vehicle driving-power source 1 is a motor.

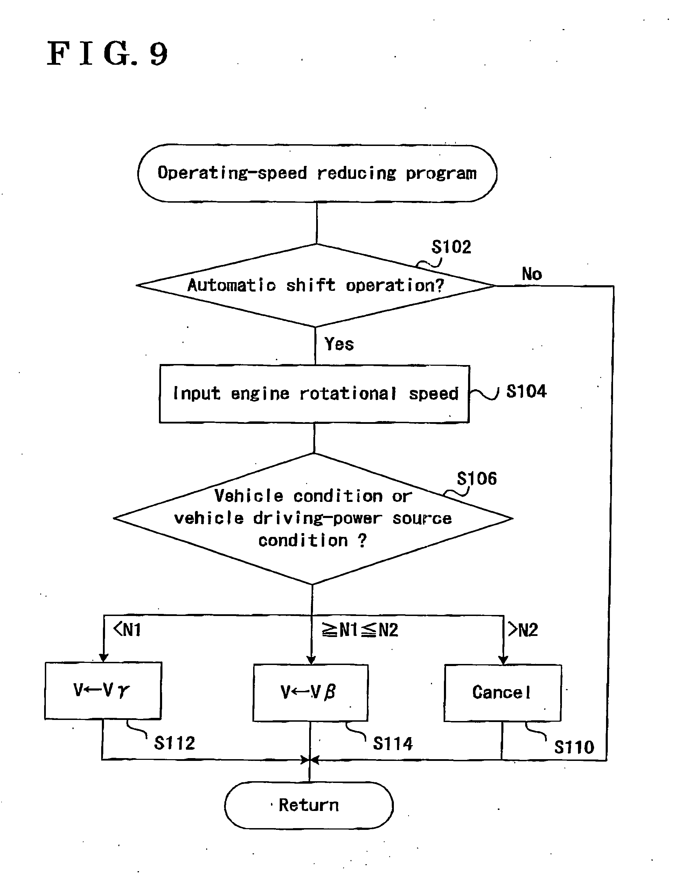

Next, described below with reference to Fig. 9 is an apparatus for controlling an automatic shift operation for a vehicle according to a fourth embodiment of the present invention. This apparatus according to the fourth embodiment of the present invention possesses substantially the same structure as the apparatus according to the third embodiment. Moreover, this apparatus according to the fourth embodiment can achieve substantially the same effects as the apparatus according to the third embodiment. Therefore, Figs. 1, 2 and 3 can be applied for explaining the apparatus according to the fourth embodiment. Hereinafter, only points of difference wit the third embodiment can be explained below.

According to the fourth embodiment as well, attention is focused on the fact that, even when impact noise among mechanical elements occurs at the event that a vehicle driving condition, or a vehicle driving-power source driving condition is relatively high, impact noise may not be so easily transmitted to an occupant. As a result, when a vehicle driving condition, or a vehicle driving-power source driving condition is relatively high, the operating speed varying process is canceled by canceling means for canceling the operating speed varying process.

As explained by a flowchart illustrated in Fig. 9, when an automatic shift operation is determined, at step S 102, to take place, the program proceeds to step S104. At step S104, the ECU 6 discriminates, on the basis of the signal representing an engine rotational speed, a current vehicle driving condition or a current vehicle driving-power source driving condition. When the engine rotational speed is discriminated, at step S106, to exceed the speed value N2, the program proceeds to step S110 for canceling the operating speed varying process by the operating speed varying means. Namely, as before, the operating speed of the driving-power operating member 31 is maintained at a relatively high speed, and impact speed among mechanical elements is maintained at a relatively high speed. Therefore, a period of time required for performing a shift operation can be abbreviated.

Even when impact noise occurs at the event that a vehicle driving condition or a vehicle driving-power source driving condition is relatively high, impact noise is not so easily transmitted to an occupant of a vehicle. When the ECU 6 determined, at step S102, that an automatic shift operation does not take place, the program returns to a main routine.

When an engine rotational speed is less than the speed value N1, the degree of quietness is marked, and impact noise can be easily transmitted to an occupant of a vehicle. Therefore, when the engine rotational speed is less than the speed value N1, as explained at step S112, the operating speed of the driving-power operating member 31 of the driving-power source 30, immediately prior to impact, is controlled at the speed value V γ which is relatively low. Therefore, impact speed among mechanical elements can be effectively reduced.

When an engine rotational speed is substantially equal to, or more than, the speed value N1 and is substantially equal to, or more than, the speed value N2, as explained at step S114, the operating speed of the driving-power operating member 31 of the driving-power source 30, immediately prior to impact, is controlled at the speed value V β which is a relatively intermediate speed.

As described above, according to the fourth embodiment of the present invention, whether the vehicle driving condition, or the vehicle driving-power source driving condition, is high or low, an occupant of a vehicle is not subjected to impact noise among mechanical elements. Although the above description is based upon the vehicle driving-power source 1 as an engine, the same structure and effects can be applied for a condition at which the vehicle driving-power source 1 is a motor.

The principles, the preferred embodiments and mode of operation of the present invention have been described in the foregoing specification. However, the invention which is intended to be protected is not to be construed as limited to the particular embodiment disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby.

## Claims

1. An apparatus for controlling an automatic shift operation for a vehicle, an apparatus which includes:
a driving-power source (30) having a driving-power operating member (31);
a shift-operating member (32) operated for switching a shift stage in a transmission (2);
a driving-power transmitting mechanism (33) having at least one of intermediate operating members (37, 40, 42, 43, 44, 47) disposed between the driving-power operating member (31) and the shift-operating member (32),
wherein a driving power of the driving-power operating member (31) is transmitted to the shift-operating member (32) via at least the one of the intermediate operating members (37, 40, 42, 43, 44, 47) so as to perform an automatic shift operation
**characterized in that** the apparatus further includes:
operating-speed varying means (6) for varying an operating speed of the driving-power source (30) on eventuality of at least one of the driving-power operating member (31) and the intermediate operating members (37, 40, 42, 43, 44, 47) impacting at least another one of the driving power operating member (31) and the intermediate operating members (37, 40, 42, 43, 44, 47),
wherein impact noise is reduced.

2. An apparatus for controlling an automatic shift operation for a vehicle according to claim 1, wherein the operating-speed varying means (6) reduces the operating speed of the driving-power source (30), immediately prior to impact, on eventuality of at least the one of the drying-power operating member (31) and the intermediate operating members (37, 40, 42, 43, 44, 47) impacting at least the another one of the driving-power operating member (31) and the intermediate operating members (37, 40, 42, 43, 44, 47), wherein the impact noise is reduced.

3. The apparatus for controlling an automatic shift operation for a vehicle according to claim 1, wherein the operating-speed varying means (6) sets the operating speed of the driving-power source (30) at a relatively high speed level when a vehicle driving condition or a vehicle driving-power source driving condition is a relatively high level, and,
sets the operating speed of the driving-power source (30) at a relatively low speed level when the vehicle driving condition or the vehicle driving-power source driving condition is a relatively low level,
the operating speed of the driving-power source (30) set at the relatively low speed level at the event of the vehicle driving condition or the vehicle driving-power source driving condition being the relatively low level is lower than the operating speed of the driving-power source (30) at the event of the vehicle driving condition or the vehicle driving-power source driving condition being the relatively high level.

4. The apparatus for controlling an automatic shift operation for a vehicle according to claim 3, wherein the operating-speed varying means (6) sets the operating speed of the driving-power source (30) at a relatively intermediate speed range when the vehicle driving condition or the vehicle driving-power source driving condition is a relatively intermediate level between the relatively high and low levels,
the operating speed of the driving-power source (30) at the relatively intermediate speed range at the event of the vehicle driving condition or the vehicle driving-power source driving condition being the relatively intermediate level is defined between the operating speeds of the driving power source (30) set at the relatively high and low speed levels.

5. The apparatus for controlling an automatic shift operation for a vehicle according to claim 3 or 4, wherein the operating-speed varying means (6) reduces the operating speed of the driving-power source (30) in response to the vehicle driving condition or the vehicle driving-power source driving condition, immediately prior to impact, on eventuality of at least the one of the driving-power source (30) and the intermediate operating members (37, 40, 42, 43, 44, 47) impacting at least the another one of the driving-power operating member (31) and the intermediate operating members 37, 40, 42, 43, 44, 47), wherein the impact noise is reduced.

6. The apparatus for controlling an automatic shift operation for a vehicle according to claim 4 or 5, wherein the operating-speed varying means (6) increase the operating speed of the driving-power source (30) gradually when the vehicle driving condition or the vehicle driving-power source driving condition is the relatively intermediate level between the relatively high and low levels.

7. The apparatus for controlling an automatic shift operation for a vehicle according to any preceding claim, wherein the operating-speed varying means (6) performs an operating-speed varying process for varying the operating speed of the driving-power source (30) on eventuality of at least the one of the driving-power operating member (31) and the intermediate operating members (37, 40, 42, 43, 44, 47) impacting at least the another one of the driving-power operating member (31) and the intermediate operating members (37, 40, 42, 43, 44, 47), and cancels the operating-speed varying process when a vehicle driving condition or a vehicle driving-power driving condition is a relatively high speed.

8. The apparatus for controlling an automatic shift operation for a vehicle according to any preceding claim, wherein the driving-power source (30) is a motor or a hydraulically driventype device.

9. The apparatus for controlling an automatic shift operation for a vehicle according to any preceding claim, wherein the shift-operating member (32) is a component of a synchronizing mechanism for the transmission (2).

10. The apparatus for controlling an automatic shift operation for a vehicle according to any preceding claim, wherein the apparatus is mounted on a vehicle, and a vehicle driving-power source (1) is provided to activate the vehicle.

11. The apparatus for controlling an automatic shift operation for a vehicle according to any preceding claim, wherein the apparatus further includes a vehicle driving-power source driving condition detecting means for detecting a condition for driving a vehicle driving-power source directly or indirectly.

12. The apparatus for controlling an automatic shift operation for a vehicle according to claim 11, wherein the vehicle driving-power source driving condition detecting means detects at least one of an engine rotational speed, a crankshaft rotational speed, a motor rotational speed, a vehicle speed, an acceleration opening degree, a throttle opening degree, a wheel rotational speed, a shift position, a condition for activating the vehicle driving-power source, and a rotational speed of the apparatus for controlling an automatic shift operation for a vehicle.

13. The apparatus for controlling an automatic shift operation for a vehicle according to any preceding claim, wherein the apparatus further includes vehicle condition detecting means for detecting a vehicle condition directly or indirectly.

14. The apparatus for controlling an automatic shift operation for a vehicle according to claim 13, wherein the vehicle condition detecting means detects at least one of an engine rotational speed, a crankshaft rotational speed, a motor rotational speed, a vehicle speed, an acceleration opening degree, a throttle opening degree, a wheel rotational speed, a shift position, and a condition for activating a vehicle driving-power source.

15. An apparatus for controlling an automatic shift operation for a vehicle, an apparatus which includes:
a driving-power source (30) activated for performing an automatic shift operation;
a shift-operating member (32) operated for switching a shift stage in a transmission (2), the transmission (2) having a synchromesh-type structure;
a driving-power transmitting mechanism (33) having at least one of intermediate operating members (31, 37, 40, 42, 43, 44, 47) disposed between the driving-power source (30) and the shift-operating member (32),
wherein the driving power of the driving-power source (30) is transmitted to the shift-operating member (32) via the at least one of the intermediate operating members (31, 37, 40, 42, 43, 44, 47) so as to perform an automatic shift operation
**characterized in that** the apparatus includes:
operating-speed varying means (6) for varying an operating speed of at least one of the driving power source (30) and the intermediate operating members (31, 37, 40, 42, 43, 44, 47) on eventuality of at least the one of the driving-power source (30) and the intermediate operating members (31, 37, 40, 42, 43, 44, 47) impacting at least another one of the driving-power source (30) and the intermediate operating members (31, 37, 40, 42, 43, 44, 47),
wherein impact noise is reduced.
